# EUROPEAN PATENT SPECIFICATION

(11) **EP 3 228 507 B1**
(45) Date of publication and mention of the grant of the patent: **30.01.2019**
(21) Application number: 17163825.7
(22) Date of filing: 30.03.2017
(51) Int. Cl.: B60S 1/40

(54) **CONNECTOR ELEMENT FOR CONNECTING TOGETHER WINDSCREEN WIPER BLADES AND ARMS FOR OPERATING THEM**
VERBINDUNGSELEMENT ZUR VERBINDUNG VON SCHEIBENWISCHERBLÄTTERN UND ARMEN ZU DEREN BETÄTIGUNG
ÉLÉMENT DE RACCORD POUR RACCORDER ENSEMBLE DES LAMES D'ESSUIE-GLACE ET DES BRAS POUR LES FAIRE FONCTIONNER

(30) Priority: 04.04.2016 IT UA20162268
(43) Date of publication of application: 11.10.2017
(73) Proprietor: Cartix S.r.l., 20123 Milano (IT)
(72) Inventor: SUPERTI, Carlo Umberto Maria, 20149 Milano (IT)
(74) Representative: Raimondi, Margherita

(56) References cited:
- EP-A1- 2 551 157
- WO-A1-2016/000785
- DE-A1-102010 062 940

## Description

The present invention relates to a connector element for connecting together windscreen wiper blades and arms for operating them.

It is known, in the technical sector relating to the production and distribution of windscreen wipers for vehicles, the blades of which must be connected to associated operating arms which can be mounted on the vehicle, that said arms have ends formed with different shapes which result in the need for different intermediate connectors having corresponding engaging elements, normally comprising a transverse pin, which is arranged between vertical dividers fixed to the blade and designed to allow engagement/disengagement with/from the intermediate connector for mounting/replacement thereof.

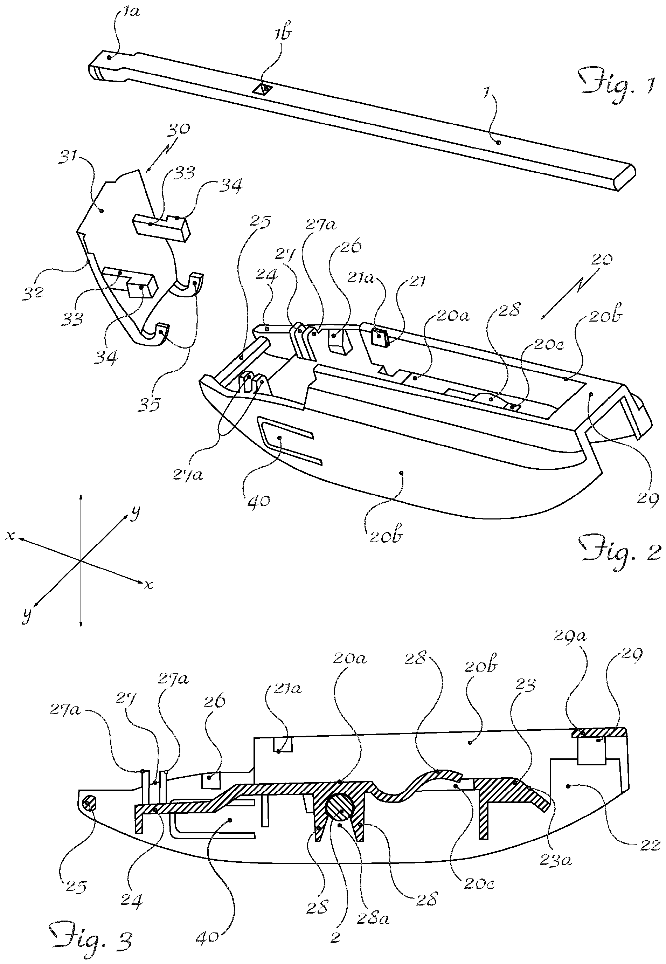

A particular example of this situation consists of the arms which have a free end for engagement with the wiper formed in the manner of a step 1a descending towards the windscreen; an example of these arms 1 is schematically illustrated in Fig. 1 showing only the free end part 1a; arms of this type also have a through-opening 1b formed at a suitable from the free end 1a.

Correspondingly, intermediate arm/blade connector elements are also known, these however, although performing their function, having the drawback that they have a complicated structure and use thereof is not easy or immediately obvious for the end user. EP-A-2551157 shows the preamble of claim 1. The technical problem which is posed, therefore, is that of providing an intermediate connector element for connecting together operating arms of windscreen wiper blades of the type having a "stepped" end and the blades themselves, which is able to provide a solution to the problems of the prior art.

In connection with this problem it is also required that this connector element should have small dimensions, be easy and inexpensive to produce and assemble and be able to fitted/removed with ease by any user, including non-specialized users, but at the same time ensure stable and reliable engagement during use.

These results are obtained according to the present invention by a connector element for connecting together windscreen wiper blades and arms for operating them formed with a stepped free end descending towards the windscreen in accordance with the characteristic features of Claim 1. Further details may be obtained from the following description of a non-limiting example of embodiment of the subject of the present invention, provided with reference to the accompanying drawings, in which:
Figure 1: shows a perspective view of an arm with a "stepped" free end according to the prior art for operating windscreen wiper blades;
Figure 2: shows an exploded view of the connector element according to the present invention;
Figure 3: shows a cross-section along a vertical plane of the body according to Fig. 2;
Figure 4: shows a perspective view of the connector according to the invention in the closed condition;
Figure 5: shows a perspective view of the first step in the sequence for assembling the connector element on the operating arm;
Figure 6: shows a schematic cross-section of the connector/arm assembly according to Fig. 5;
Figure 7: shows a schematic cross-section along a vertical plane of the connector mounted on the operating arm;
Figure 8: shows a perspective view of the connector/arm assembly according to Fig. 7; and
Figures 9a-9b: show variants of examples of embodiment of details of the connector according to the invention.

As shown and assuming solely for the sake of easier description and without a limiting meaning a set of three reference axes, i.e. in a longitudinal direction X-X, corresponding to the lengthwise dimension of the connector element; transverse dimension Y-Y, corresponding to the widthwise dimension of the connector element; and vertical direction Z-Z, perpendicular to the other two directions and corresponding to the heightwise direction of the connector, as well as a front part, close during use to the end 1a of the operating arm, and a rear part, far from the end 1a of the operating arm, the connector element according to the invention comprises:
- a body 20, which is preferably internally hollow, having:
   a substantially parallelepiped shape preferably with a height in the vertical direction Z-Z much smaller than the length in the longitudinal direction X-X;
   upper base 20a and vertical sidewalls 20b;
   the upper base 20a of the body 20 is inset with respect to the free edges of the sidewalls 20b, so as to form a seat for containing the arm 1, as will emerge more clearly below;
   an eyelet 28a (Fig. 3) open along the vertical axis Z-Z in the opposite direction to the upper base 20a and defined by vertical walls 28 so as to form means for engagement with a transverse pin mounted on corresponding dividers (detail not shown) of the wiper;
   the front part of the base 20a forms a shaped tongue 24 which is inset even lower in the vertical direction Z-Z relative to the base 20a so as to form a seat for the step 1a of the operating arm 1;
   the front end of the body 20 has a transverse pin 25 which forms the axis of rotation of a cover 30 described below;
   the following are formed on each sidewall 20b of the body 20:
- a first tooth 21 projecting inwards in the transverse direction Y-Y and having a surface 21a inclined from the top downwards and towards the inside of the body 20;
- a second tooth 26 in turn projecting inwards in the transverse direction Y-Y and arranged in front of the first tooth 21 in the longitudinal direction along the end part;
- a seat 27 defined in the longitudinal direction X-X by two vertical walls 27a projecting in the vertical direction Z-Z beyond the top edge of the respective sidewall 20b.

The upper surface 20a also has formed together therewith: a resilient element 28 projecting towards the upper opening of the body 20 through a slit 20c of the same base 20a and able to be deformed resiliently downwards so as to exert a thrust in the vertical direction against the arm 1;
- in the vicinity of its rear end the body 20 has a crosspiece 29a from which a projection 29 extends inwards in the vertical direction Z-Z and is designed to engage with the opening 1b in the operating arm 1;
- close to its rear end, the upper base 20a of the body 20 has a transverse support element 23; preferably a rear part of the upper surface 23a of support element 23 is inclined downwards and from the front to the rear of the body 20 so as to form an entry guide for the arm 1 at an angle of about 45°, as will become clearer below. The extension of the support element 23 and the relief 29 are such as to create an access aperture (22) for entry of the arm 1 in the longitudinal direction during relative engagement;

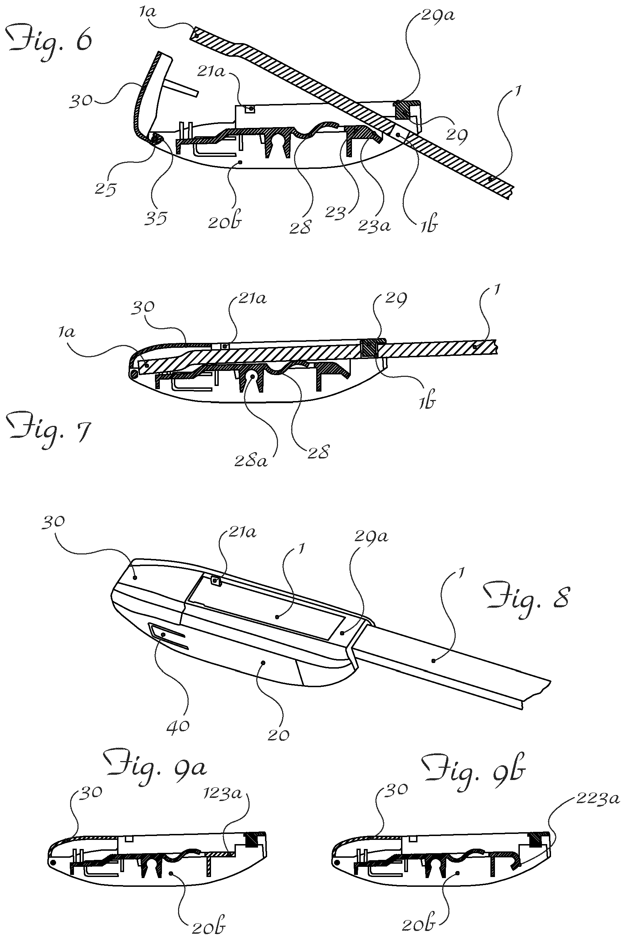

   Figs. 9a,9b show alternative embodiments 123a,223a of the inclined surface of the support element 23;
   - a cover 30 which has:
      a body 31 with a shape and size matching those of the end of the body 20; vertical sidewalls 32 shaped so as to correspond to the extension of the sidewalls 20a of the body 20 along the inset front tongue; the inner surface of the cover has arms 33 extending inwards with the free end formed in the manner of a tooth 34 which is resiliently deformable in the transverse direction Y-Y; in its part for engagement with the body 20 the cover 30 has two hooks 35 which are preferably curved and designed to engage onto the crosspiece 25 around which they are able to rotate from a position for opening into a position for closing the end of the body 20 and vice versa.

Preferably, each sidewall 20b of the body 20 has a respective tongue 40 arranged in a longitudinal direction X-X opposite the position of the second teeth 26 and below the latter in the vertical direction Z-Z; the tongues 40 are resiliently deformable towards the inside of the body 20 so as to act against the respective tooth 34 of the cover 30 and be inwardly retracted in the transverse direction Y-Y so as to act on the teeth 34 of the cover, causing disengagement thereof from the respective second tooth 26 and therefore the cover 30 which may be rotationally operated so as to open if required.

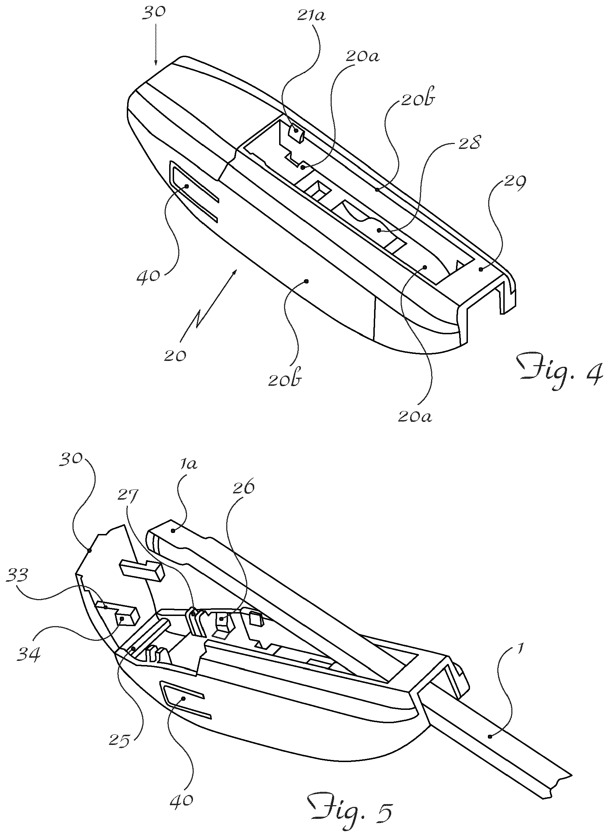

With this configuration operation of the connector according to the invention is as follows (Figs. 5, 6,7,8):
- starting from a condition where the cover 30 is rotated open with respect to the body 20,
- the arm 1 is inserted inside the aperture 22 situated between the support element 23 and the projection 29, maintaining an inclination of about 45° and causing it to slide on the transverse support element 23,23a until the opening 1b in the arm is located opposite the projection 29;
- the arm is rotated towards the base 20a (in an anti-clockwise direction according to the layout shown by way example in the figures) so as to cause its stepped end 1a to engage inside the front inset seat 24 of the body 20 and cause the section situated between the step 1a and the hole 1b to slide on the first teeth 25 and second teeth 26 until it passes beyond them and the arm rests on the upper base 20a;

- in this condition the resilient means 28 push the arm 1 from the bottom upwards in the vertical direction Z-Z, favouring engagement between hole 1b and projection 29 and the reaction in the vertical direction, but from the top downwards, of the said first teeth 21 on the arm;
- the cover 30 is rotated about the transverse pin 25 by means of the hooks 35 until the teeth 34 engage with the corresponding second teeth 26 of the body 20.

In order to disengage the connector from the arm 1, the tongues 40 are operated in the reverse sequence (not described since within the competence of a person skilled in the art).

It is therefore clear how the connector element according to the invention is simple and inexpensive to produce and assemble and is designed in such a way that the operation of inserting/extracting the connector element into/from the operating arm is particularly easy and obvious, while ensuring stable and secure relative engagement determined in particular by the combined action of the rear projection 29, the projecting resilient element 28 of the first teeth 25 and second teeth 26 of the body 20 and by the cover 30 for closing the front end 1a of the body 20, said cover in turn being firmly retained by the interaction of its teeth 35 with the second teeth 26.

Although described in connection with a number of embodiments and a number of preferred examples of embodiment of the invention, it is understood that the scope of protection of the present patent is determined solely by the claims below.

## Claims

1. Connector element for connecting windscreen wiper blades to arms (1,1a,1b) for driving thereof which are shaped with a free end (1a) in the form of a step descending towards the windscreen and have a through-opening (1b), the connector comprising :
- a body (20) which has
a substantially parallelepiped form, with height in a vertical direction (Z-Z), width in a transverse direction (Y-Y) and length in longitudinal direction (X-X) and is bounded by a vertical sidewalls (20b) and
an upper base (20a) inset lower than the free edge of the sidewalls (20b) so as to form a seat for containing the arm (1);
a front end of the base (20a) being formed in the manner of a shaped longitudinal tongue (24) of the upper base (20a) which is inset even lower so as to form a seat (24a) for the step (1a) of the operating arm (1);
an eyelet (28a) open in the vertical direction (Z-Z) on the opposite side to the upper base (20a) and defined by vertical walls (28) so as to form means for engagement with a transverse pin (2) mounted on corresponding dividers of the wiper;
wherein the following is formed on each sidewall (20b) of the body (20):
- a first tooth (21) projecting inwards in the transverse direction (Y-Y) and having a surface (21a) inclined from the top downwards and towards the inside of the body (20); the connector being **characterized by** further comprising :
- a cover (30) for closing the front end of the body (20) and
- in the vicinity of its rear end the body (20) has a transverse crosspiece (29a) from which a projection (29) extends in the vertical direction (Z-Z) towards the inside of the body and which is designed to engage with the opening (1b) of the operating arm (1).

2. Connector element according to Claim 1, **characterized in that** each sidewall (20b) of the body (20) has a second tooth (26) projecting towards the inside of the body in the transverse direction (Y-Y) and arranged in front of the first tooth (25) in the longitudinal direction (X-X) opposite the front part formed in the manner of an inset tongue (24).

3. Connector element according to any one of the preceding claims, **characterized in that** each sidewall (20b) has a seat (27) defined in the longitudinal direction (X-X) by two vertical walls (27a) projecting in the vertical direction (Z-Z) beyond the edge of the respective sidewall (20b) in the front part formed in the manner of an inset tongue (24).

4. Connector element according to any one of the preceding claims, **characterized in that** the upper surface (20a) has, formed together therewith, a resilient element (28) projecting towards the upper opening of the body (20) through a slit (20c) and able to be deformed resiliently downwards so as to exert a reaction force upwards in the vertical direction against the arm (1).

5. Connector element according to any one of the preceding claims, **characterized in that** the body (20) has a transverse support element (23) in the vicinity of the upper base (20a).

6. Connector element according to the preceding claim, **characterized in that** the upper surface (23a;123a;223a) of a rear part of the said support element is inclined downwards and from the front to the rear of the body (20) so as to form an entry guide for the arm (1).

7. Connector element according to the preceding claim, **characterized in** the extension of the support element (23) and the projection (29) are such as to create an access aperture (22) for entry of the arm (1) during relative engagement.

8. Connector element according to any one of the preceding claims, **characterized in that**, in its part for engagement with the body (20), the cover (30) has two engaging elements (35) which are preferably curved and designed to engage onto the crosspiece (25) around which they are able to rotate from an open position into a closed position and vice versa.

9. Connector element according to any one of the preceding claims, **characterized in that** the inner surface of the cover (30) has arms (33) extending inwards with a free end formed in the manner of a tooth (34) which is resiliently deformable in the transverse direction (Y-Y) and able to engage with said second teeth (26) formed in the sidewalls (20b) of the body (20).

10. Connector element according to any one of the preceding claims, **characterized in that** each sidewall (20b) of the body (20) has a respective tongue (40) arranged in the longitudinal direction (X-X) opposite the position of the second teeth (26) and below the latter in the vertical direction (Z-Z), the tongues (40) being resiliently deformable in the transverse direction (Y-Y) towards the inside of the body (20) so as to act against the respective tooth (34) of the cover (30) and cause disengagement of the cover for rotational opening thereof.

## Patentansprüche

1. Verbindungselement zum Verbinden von Windschutzscheibenwischerblättern mit Armen (1, 1a, 1b), um diese anzutreiben, das mit einem freien Ende (1a) in der Form einer offenen Stufe ausgebildet ist, die in Richtung der Windschutzscheibe abfällt, und das eine Durchgangsöffnung (1b) aufweist, wobei der Verbinder das Folgende umfasst:
- einen Körper (20), der das Folgende aufweist:
eine im Wesentlichen parallelpipede Form mit einer Höhe in einer Vertikalrichtung (Z-Z), einer Breite in einer Querrichtung (Y-Y) und einer Länge in einer Längsrichtung (X-X) aufweist und der durch vertikale Seitenwände (20b) begrenz ist und
eine obere Basis (20a), die niedriger als der freie Rand der Seitenwände (20b) eingesetzt ist, um einen Sitz zum Halten des Arms (1) zu bilden;
wobei ein vorderes Ende der Basis (20a) in der Art einer längsförmigen Zunge (24) von der oberen Basis (20a) ausgebildet ist, die noch niedriger eingesetzt ist, um einen Sitz (24a) für die Stufe (1a) des Betriebsarms (1) bilden;
eine Öse (28a), die in der Vertikalrichtung (Z-Z), und zwar an der entgegengesetzten Seite zur oberen Basis (20a), offen und durch vertikale Wände (28) definiert ist, um Mittel zum Eingriff mit einem Querstift (2) zu bilden, der an entsprechenden Teilern des Wischers befestigt ist;
wobei das Folgende an jeder Seitenwand (20b) des Körpers (20) ausgebildet ist:
- ein erster Zahn (21), der in der Querrichtung (Y-Y) nach innen vorsteht und eine Oberfläche (21a) aufweist, die von oben nach unten und in Richtung der Innenseite des Körpers (20) schräg verläuft;
wobei der Verbinder **dadurch gekennzeichnet ist, dass** er das Folgende umfasst:
- eine Abdeckung (30) zum Verschließen von dem vorderen Ende des Körpers (20) und
- ein queres Querstück (29a), das der Körper (20) in der Umgebung von seinem hinteren Ende aufweist, von dem aus sich ein Vorsprung (29) in der Vertikalrichtung (Z-Z) in Richtung der Innenseite des Körpers erstreckt und das so gestaltet ist, um in die Öffnung (1b) des Betriebsarms (1) einzugreifen.

2. Verbindungselement nach Anspruch 1, **dadurch gekennzeichnet, dass** jede Seitenwand (20b) des Körpers (20) einen zweiten Zahn (26) aufweist, der in der Querrichtung (Y-Y) in Richtung der Innenseite des Körpers vorsteht und in der Längsrichtung (X-X) vor dem ersten Zahn (25) angeordnet ist, und zwar gegenüberliegend von dem vorderen Teil, der in der Art einer eingesetzten Zunge (24) ausgebildet ist.

3. Verbindungselement nach einem der vorhergehenden Ansprüche, **dadurch gekennzeichnet, dass** jede Seitenwand (20b) einen Sitz (27) aufweist, der in der Längsrichtung (X-X) durch zwei vertikale Wände (27a) definiert ist, die sich in der Vertikalrichtung (Z-Z) jenseits des Rands der entsprechenden Seitenwand (20b) in den vorderen Teil erstrecken, der in der Art einer eingesetzten Zunge (24) ausgebildet ist.

4. Verbindungselement nach einem der vorhergehenden Ansprüche, **dadurch gekennzeichnet, dass** die obere Oberfläche (20a) zusammen damit ein nachgiebiges Element (28) ausgebildet hat, das in Richtung der oberen Öffnung des Körpers (20) durch einen Schlitz (20c) vorsteht und in der Lage ist, nachgiebig nach unten deformiert zu werden, um eine Reaktionskraft in der Vertikalrichtung nach oben gegen den Arm (1) auszuüben.

5. Verbindungselement nach einem der vorhergehenden Ansprüche, **dadurch gekennzeichnet, dass** der Körper (20) ein queres Stützelement (23) in der Umgebung der oberen Basis (20a) aufweist.

6. Verbindungselement nach einem der vorhergehenden Ansprüche, **dadurch gekennzeichnet, dass** die obere Oberfläche (23a; 123a; 223a) von einem hinteren Teil des Stützelements nach unten und von vorne nach hinten von dem Körper (20) geneigt ist, um eine Eintrittsführung für den Arm (1) zu bilden.

7. Verbindungselement nach einem der vorhergehenden Ansprüche, **dadurch gekennzeichnet, dass** die Verlängerung von dem Stützelement (23) und der Vorsprung (29) so sind, um eine Zugangsöffnung (22) für den Eintritt von dem Arm (1) während des relativen Eingriffs zu erzeugen.

8. Verbindungselement nach einem der vorhergehenden Ansprüche, **dadurch gekennzeichnet, dass** die Abdeckung (30) in ihrem Teil für den Eingriff mit dem Körper (20) zwei eingreifende Elemente (35) aufweist, die vorzugsweise gekrümmt und so gestaltet sind, um an dem Querstück (25) einzugreifen, um das sie sich aus einer offenen Position in eine geschlossene Position und andersherum in der Lage sind zu drehen.

9. Verbindungselement nach einem der vorhergehenden Ansprüche, **dadurch gekennzeichnet, dass** die Innenoberfläche der Abdeckung (30) Arme (33), die sich nach innen erstrecken, mit einem freien Ende aufweist, das in der Art eines Zahns (34) ausgebildet ist, der nachgiebig in der Querrichtung (Y-Y) deformierbar und in der Lage ist, mit dem zweiten Zahn (26), der in den Seitenwänden (20b) des Körpers (20) ausgebildet ist, einzugreifen.

10. Verbindungselement nach einem der vorhergehenden Ansprüche, **dadurch gekennzeichnet, dass** jede Seitenwand (20b) des Körpers (20) eine entsprechende Zunge (40) aufweist, die in der Längsrichtung (X-X) gegenüberliegend der Position von dem zweiten Zahn (26) und unter dem Letzteren in der vertikalen Richtung (Z-Z) angeordnet ist, wobei die Zungen (40) nachgiebig in der Querrichtung (Y-Y) in Richtung der Innenseite des Körpers (20) deformierbar sind, um gegen den entsprechenden Zahn (34) der Abdeckung (30) zu wirken und eine Loslösung der Abdekkung für ein drehendes Öffnen davon zu veranlassen.

## Revendications

1. Élément connecteur permettant de connecter des balais d'essuie-glaces de pare-brise à des bras (1, la, 1b) à des fins de les entraîner, qui sont façonnés avec une extrémité libre (1a) sous la forme d'un dénivelé descendant en direction du pare-brise et qui comportent une ouverture traversante (1b),
le connecteur comprenant :
- un corps (20) de forme sensiblement parallélépipédique, ayant une hauteur dans une direction verticale (Z-Z), une largeur dans une direction transversale (Y-Y) et une longueur dans une direction longitudinale (X-X) et délimité par des parois latérales verticales (20b) et comportant
une base supérieure (20a) intercalée plus bas que le bord libre des parois latérales (20b) de façon à former un logement destiné à contenir le bras (1) ;
une extrémité avant de la base (20a) étant façonnée à la manière d'une languette longitudinale en forme (34) de la base supérieure (20a) intercalée encore plus bas de façon à former un logement (24a) destiné au dénivelé (1a) du bras d'actionnement (1) ;
un oeillet (28a) ouvert dans la direction verticale (Z-Z) du côté faisant face à la base supérieure (20a) et défini par des parois verticales (28) de façon à former un moyen permettant une coopération avec une broche transversale (2) montée sur des séparateurs correspondants de l'essuie-glace ;
dans lequel
les éléments suivants sont formés sur chaque paroi latérale (20b) du corps (20) :
- une première dent (21) en saillie vers l'intérieur dans la direction transversale (Y-Y) et comportant une surface (21a) inclinée du haut vers le bas et en direction de l'intérieur du corps (20) ; le connecteur étant **caractérisé en ce qu'**il comprend en outre :
- un couvercle (30) destiné à fermer l'extrémité avant du corps (20) et
- le corps (20) comporte, à proximité de son extrémité arrière, une traverse transversale (29a) de laquelle une saillie (29) s'étend dans la direction verticale (Z-Z) en direction de l'intérieur du corps et qui est conçue pour coopérer avec l'ouverture (1b) du bras d'actionnement (1).

2. Élément connecteur selon la revendication 1, **caractérisé en ce que** chaque paroi latérale (20b) du corps (20) comporte une seconde dent (26) en saillie en direction de l'intérieur du corps dans la direction transversale (Y-Y) et disposée en face de la première dent (25) dans la direction longitudinale (X-X) à l'opposé de la partie avant formée à la manière d'une languette intercalée (24).

3. Élément connecteur selon l'une quelconque des revendications précédentes, **caractérisé en ce que** chaque paroi latérale (20b) comporte un logement (27) défini dans la direction longitudinale (X-X) par deux parois verticales (27a) en saillie dans la direction verticale (Z-Z) au-delà du bord de la paroi latérale respective (20b) dans la partie avant formée à la manière d'une languette intercalée (24) .

4. Élément connecteur selon l'une quelconque des revendications précédentes, **caractérisé en ce que** la surface supérieure (20a) comporte, formé conjointement avec cette dernière, un élément élastique (28) en saillie en direction de l'ouverture supérieure du corps (20) à travers une fente (20c) et pouvant se déformer élastiquement vers le bas de façon à appliquer, au bras (1), une force de réaction vers le haut dans la direction verticale.

5. Élément connecteur selon l'une quelconque des revendications précédentes, **caractérisé en ce que** le corps (20) comporte un élément de support transversal (23) à proximité de la base supérieure (20a).

6. Élément connecteur selon la revendication précédente, **caractérisé en ce que** la surface supérieure (23a ; 123a ; 223a) d'une partie arrière dudit élément de support est inclinée vers le bas et de l'avant vers l'arrière du corps (20) de façon à former un guide d'entrée destiné au bras (1).

7. Élément connecteur selon la revendication précédente, **caractérisé en ce que** l'étendue de l'élément de support (23) et la saillie (29) sont telles qu'elles créent une ouverture d'accès (22) d'entrée destinée au bras (1) lors d'une coopération relative.

8. Élément connecteur selon l'une quelconque des revendications précédentes, **caractérisé en ce que**, dans sa partie de coopération avec le corps (20), le couvercle (30) comporte deux éléments d'emboîtement (35) qui sont de préférence courbés et conçus pour s'emboîter sur la traverse (25) autour de laquelle ils peuvent pivoter d'une position ouverte à une position fermée, et vice versa.

9. Élément connecteur selon l'une quelconque des revendications précédentes, **caractérisé en ce que** la surface intérieure du couvercle (30) comporte des bras (33) s'étendant vers l'intérieur dotés d'une extrémité libre façonnée à la manière d'une dent (34) qui peut se déformer élastiquement dans la direction transversale (Y-Y) et qui peut coopérer avec lesdites secondes dents (26) formées dans les parois latérales (20b) du corps (20).

10. Élément connecteur selon l'une quelconque des revendications précédentes, **caractérisé en ce que** chaque paroi latérale (20b) du corps (20) comporte une languette respective (40) disposée dans la direction longitudinale (X-X) en regard de la position des secondes dents (26) et au-dessous de ces dernières dans la direction verticale (Z-Z), les languettes (40) pouvant se déformer élastiquement corps (20) de façon à agir contre la dent respective (34) du couvercle (30) et à provoquer un désaccouplement du couvercle à des fins d'ouverture pivotante de ce dernier.
